(19) Europäisches Patentamt
European Patent Office
Office européen des brevets

(11) **EP 1 604 726 A1**

(12) **EUROPEAN PATENT APPLICATION**

(43) Date of publication:
**14.12.2005 Bulletin 2005/50**

(51) Int Cl.$^7$: **B01D 39/20**, B28B 11/00,
F01N 3/022, C04B 38/00,
B01D 53/92

(21) Application number: **05253511.9**

(22) Date of filing: **08.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **09.06.2004 JP 2004170903**

(71) Applicant: **NGK INSULATORS, LTD.
Nagoya-City, Aichi Pref. 467-8530 (JP)**

(72) Inventors:
• **Yamada, Toshio**
  **Nagoya City Aichi-ken 467-8530 (JP)**
• **Noguchi, Yasushi**
  **Nagoya City Aichi-ken 467-8530 (JP)**

(74) Representative: **Paget, Hugh Charles Edward et al
Mewburn Ellis LLP
York House
23 Kingsway
London WC2B 6HP (GB)**

(54) **Honeycomb filter and method of manufacturing the same**

(57) There is disclosed a plugged honeycomb structure which can be easily regenerated with less cost and less energy consumption in a short time without changing an existing regeneration system. The plugged honeycomb structure includes: a honeycomb structure having partition walls formed of porous materials and a large number of cells defined formed by the partition walls to constitute channels of a fluid; and a plugging portion which plugs any opening of the cell of the honeycomb structure. The structure further includes: a narrowed portion constituted in such a manner as to cover a part of an opening (non-plugged opening) which is not plugged by the plugging portion of the cell so that an open area of the non-plugged opening is reduced to be smaller than a channel sectional area of the cell.

FIG.2(b)

**Description**

BACKGROUND OF THE INVENTION

Field of the Invention

The present invention relates to a plugged honeycomb structure preferably for use, for example, as a filtering material of a dust collecting filter and comprising a plugging portion for closing any opening of a cell, and a method of manufacturing the structure, particularly to a plugged honeycomb structure which can be easily regenerated with a low cost in a short time and a method of manufacturing the structure.

Description of the Related Art

In various fields including chemistry, electricity, iron and steel, and industrial waste disposal, a honeycomb structure formed of a porous material has been used as a filtering material of a dust collecting filter for use in an environmental measure for preventing pollution, application like product recovery from a high-temperature gas and the like. A honeycomb structure formed of a ceramic porous material superior in resistances to heat and corrosion has been preferably used as a dust collecting filter for use at high temperature or under a corrosive gas atmosphere as in a diesel particulate filter (DPF) for capturing particulate matters (PM) discharged from a diesel engine such as automobile diesel engine.

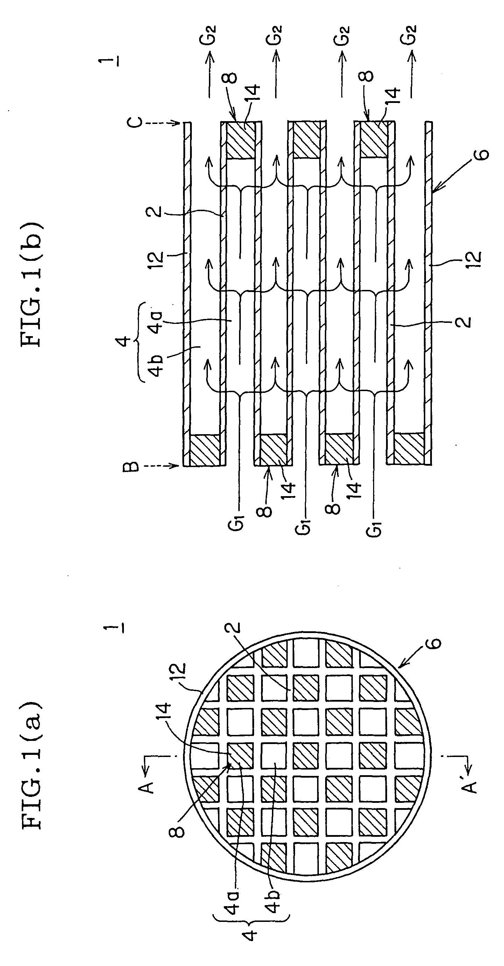

As a honeycomb structure for use in a dust collecting filter, for example, as shown in FIGS. 1(a)(b), a plugged honeycomb structure 1 is generally used comprising: a honeycomb structure 6 having partition walls 2 formed of porous materials and a large number of cells 4 defined•formed by the partition walls 2 to constitute channels of a fluid; and plugging portions 8 which close any opening of the cell 4 of the honeycomb structure 6 (see, e.g., Japanese Patent Application Laid-Open No. 57-7215). According to the plugged honeycomb structure 1 having this structure, when a gas $G_1$ to be treated introduced into a fluid supply cell 4a from an inlet-side end face B flows in an adjacent fluid discharge cell 4b through the partition wall 2, PM included in the gas $G_1$ to be treated is captured in the partition wall 2. Moreover, a treated gas $G_2$ which has flown into the adjacent fluid discharge cell 4b through the partition wall 2 is discharged from an outlet-side end face C, and therefore the treated gas $G_2$ from which the PM in the gas $G_1$ to be treated is separated•removed can be obtained.

Additionally, when the dust collecting filter utilizing the above-described plugged honeycomb structure is continuously used, the captured PM closes the surface of the partition wall, pressure loss increases, and therefore a filter performance drops. Especially, in a DPF mounted on an automobile, the performance of an engine degrades by not only degradation of the filter performance but also the increase of the pressure loss, or fuel consumption is unfavorably deteriorated. Therefore, it is general to periodically perform a treatment (referred to as "regeneration") for heating the filter to burn and remove the captured PM.

As a method of regenerating the DPF, for example, a regeneration method or the like is known in which a fuel supplied by post injection(which means the injection of the fuel in a latter half of an explosion stroke or an exhaust stroke) is burnt, or a heater is disposed above the DPF, accordingly temperature of the discharged exhaust gas is raised, and the DPF is heated utilizing the exhaust gas at high temperature (see, e.g., Japanese Patent Application Laid-Open No. 2002-322906).

The above-described regeneration method utilizing the post injection or the heater has an advantage that the DPF can be easily regenerated, and is broadly adopted in various automobiles. However, there is still a room for improvement in any of the methods in that the regeneration of the DPF requires comparatively large energy and long time. When the regeneration of the DPF requires large energy or long time, needless to say, the fuel consumption is unfavorably deteriorated.

SUMMARY OF THE INVENTION

At present, a measure capable of easily regenerating the dust collecting filter with less energy consumption in a short time has not been disclosed yet, and there has been a demand for creation of the measure in an industrial world. The present invention has been developed to solve the above-described problem of a conventional technique, and an object thereof is to provide a plugged honeycomb structure which produces an advantage effect that a filter can be easily regenerated with less cost and less energy consumption in a short time without changing an existing regeneration system as compared with a conventional structure, and a manufacturing method capable of easily manufacturing a plugged honeycomb structure in manufacturing steps which are similar to or simpler than those of a conventional structure without involving any laborious manufacturing step.

To solve the above-described problem, the present inventors have first studied a cause why a regeneration method using post injection or heating heater requires a long time in regeneration of DPF. As a result, it has been found that a heat amount of a supplied exhaust gas at high temperature is not effectively utilized, and a heating effect corresponding to the heat amount is not obtained. That is, even when an exhaust gas at high temperature is supplied from a fluid supply cell 4a in a plugged honeycomb structure 1 having a conventional structure shown in FIG. 1, heat is discharged from a fluid discharge cell 4b without being sufficiently conducted to the plugged honeycomb structure 1. Therefore, the heat amount of the supplied exhaust gas at high temperature is not effectively utilized, and the heating effect corresponding to the heat amount has not been obtained. By this situation, large energy and long time are unavoidably required in the regeneration of the DPF.

As a result of intensive researches of a noted structure of a plugged honeycomb structure, the present inventors have found that a structure capable of bringing the exhaust gas into sufficient contact with the partition wall of the plugged honeycomb structure is effective for solving the above-described disadvantage. Moreover, it has been considered that the above-described problem can be solved by an inventive constitution in which a part of a non-plugged opening of a cell is covered, and an open area is reduced as compared with a channel sectional area of the cell to form a narrowed portion, and the present invention has been completed. That is, according to the present invention, the following plugged honeycomb structure and method of manufacturing the structure are provided.

[1] A plugged honeycomb structure comprising: a honeycomb structural body having partition walls formed of porous materials and a large number of cells defined•formed by the partition walls to constitute channels of a fluid; and a plugging portion which plugs an opening of the cell of the honeycomb structural body, the plugged honeycomb structure further comprising: a narrowed portion constituted in such a manner as to cover a part of an opening (non-plugged opening) which is not plugged by the plugging portion of the cell so that an open area of the non-plugged opening is reduced to be smaller than a channel sectional area of the cell.

[2] The plugged honeycomb structure according to the above [1], wherein the narrowed portion is constituted in such a manner as to cover 5 to 40% by area of the non-plugged opening so that the open area of the non-plugged opening is reduced into 60 to 95% by area of the channel sectional area of the cell.

[3] The plugged honeycomb structure according to the above [1], wherein the narrowed portion is constitute in such a manner as to cover 5 to 25% by area of the non-plugged opening so that the open area of the non-plugged opening is reduced into 75 to 95% by area of the channel sectional area of the cell.

[4] The plugged honeycomb structure according to any one of the above [1] to [3], wherein the plugging portion comprises, as a main component, the same component as a main component of the partition wall, and is integrated with the partition wall.

[5] The plugged honeycomb structure according to any one of the above [1] to [4], wherein the plugging portion comprises a sheet member having a thickness of 0.5 to 3 mm.

[6] The plugged honeycomb structure according to any one of the above [1] to [5], wherein the plugging portion and/or the narrowed portion has a high-strength portion having a mechanical strength higher than that of another portion in at least a part thereof.

[7] The plugged honeycomb structure according to the above [6], wherein the plugging portion and/or the narrowed portion has the high-strength portion whose porosity is lower than that of the other portion by 5% or more, and is densified.

[8] The plugged honeycomb structure according to any one of the above [1] to [7], wherein the plugging portion has a thermal expansion coefficient difference from the partition wall, which is $0.5 \times 10^{-6}/°C$ or less in a temperature range of 40 to 800°C.

[9] The plugged honeycomb structure according to any one of the above [1] to [8], wherein the narrowed portion is integrated with the plugging portion.

[10] The plugged honeycomb structure according to any one of the above [1] to [9], wherein the partition wall excluding an end portion thereof is formed of a porous material whose porosity is in a range of 50 to 85%.

[11] The plugged honeycomb structure according to any one of the above [1] to [10], wherein the plugging portion is constituted in such a manner that a communication hole for connecting the inside of the cell to the outside of the cell is formed, and ashes deposited in the cell are discharged to the outside of the cell via the communication hole.

[12] A method of manufacturing a plugged honeycomb structure comprising: a honeycomb structural body having partition walls formed of porous materials and a large number of cells defined•formed by the partition walls to constitute channels of a fluid; a plugging portion which plugs an opening of the cell of the honeycomb structural body; and a narrowed portion constituted in such a manner as to cover a part of an opening (non-plugged opening) which is not plugged by the plugging portion of the cell so that an open area of the non-plugged opening is reduced to be smaller than a channel sectional area of the cell, the method comprising the steps of: disposing a plugging material in such a manner as to plug an opening of the cell of the honeycomb structural body to form the plugging portion; covering a part of the non-plugged opening with the plugging material to form the narrowed portion; and accordingly forming the plugging portion and the narrowed portion at the same time to obtain the plugged honeycomb structure.

[13] The method of manufacturing the plugged honeycomb structure according to the above [12], further comprising the steps of: bonding a ceramic sheet member which is the plugging material to an end face of the honeycomb structural body; thereafter making a hole in a portion corresponding to the non-plugged opening of the honeycomb structural body in the ceramic sheet member; and opening the non-plugged opening by an area corresponding to 60 to 95% by area of the channel sectional area of the cell to thereby form the plugging portion and the narrowed portion at the same time.

[14] The method of manufacturing the plugged honeycomb structure according to the above [12], further comprising the steps of: using a punching sheet as the plugging material, which is obtained by making a hole in a ceramic sheet member in such a manner as to face a position of the non-plugged opening of the honeycomb structural body; bonding the punching sheet to an end face of the honeycomb structural body in such a manner as to align the hole with the position of the non-plugged opening; and opening the non-plugged opening by an area corresponding to 60 to 95% by area of the channel sectional area of the cell to thereby form the plugging portion and the narrowed portion at the same time.

[15] The method of manufacturing the plugged honeycomb structure according to the above [13] or [14], further comprising the steps of: forming the plugging portion and the narrowed portion at the same time using a non-fired honeycomb dried article as the honeycomb structural body and using a non-dried sheet-like ceramic formed article (green sheet) as the ceramic sheet member; and thereafter drying•firing the portions to obtain the plugged honeycomb structure.

[16] The method of manufacturing the plugged honeycomb structure according to the above [15], wherein the green sheet contains a melting-point drop component of a ceramic which is a constituting component.

[17] The method of manufacturing the plugged honeycomb structure according to the above [15] or [16], wherein a support material having a burn-off property is used, as the green sheet, to which a ceramic slurry is attached or which is impregnated with the ceramic slurry.

[18] The method of manufacturing the plugged honeycomb structure according to the above [15] or [16], wherein a support material having a burn-off property is used, as the green sheet, which is provided with irregularities on the surface thereof and to which a ceramic slurry is attached or which is impregnated with the ceramic slurry.

[19] The method of manufacturing the plugged honeycomb structure according to any one of the above [13] to [18], further comprising the steps of: making the hole in the ceramic sheet member by laser processing.

[20] The method of manufacturing the plugged honeycomb structure according to any one of the above [13] to [18], further comprising the steps of: pressing a needle-point-holder-shaped jig having a large number of protrusions to thereby form the hole in the ceramic sheet member

[21] The method of manufacturing the plugged honeycomb structure according to any one of the above [13] to [20], further comprising the steps of: making the hole in the ceramic sheet member; and thereafter jetting a fluid to the made hole.

The plugged honeycomb structure of the present invention produces an advantageous effect, as compared with a conventional structure, that the structure can be easily regenerated with less energy in a short time. Moreover, the manufacturing method of the present invention is capable of easily manufacturing the plugged honeycomb structure in manufacturing steps similar to or simpler than those of the conventional structure without involving any laborious manufacturing step.

BRIEF DESCRIPTION OF THE DRAWINGS

FIGS. 1(a)(b) are schematic diagrams showing one embodiment of a conventional plugged honeycomb structure, FIG. 1(a) is a front view from a cell opening end face, and FIG. 1(b) is a sectional view along line A-A' of FIG. 1(a);

FIGS. 2(a)(b) are schematic diagrams showing one embodiment of a plugged honeycomb structure according to the present invention, FIG. 2(a) is a front view from a cell opening end face, and FIG. 2(b) is a sectional view along line A-A' of FIG. 2(a);

FIGS. 3(a)(b) are schematic diagrams showing one example of a honeycomb structure, FIG. 3(a) is a front view from a cell opening end face, and FIG. 3(b) is a perspective view;

FIGS. 4(a)(b) are schematic diagrams showing another embodiment of the plugged honeycomb structure of the present invention, FIG. 4(a) is a front view from a cell opening end face, and FIG. 4(b) is a sectional view along line A-A' of FIG. 4(a);

FIGS. 5(a)(b) are schematic diagrams showing one example of a plugged honeycomb structure in which a communication hole for discharging ashes is formed in a plugging portion, FIG. 5(a) is a front view from a cell opening end face, and FIG. 5(b) is a sectional view along line A-A' of FIG. 5(a);

FIGS. 6(a)(b) are step diagrams showing a shape change of a sheet member in a case where a green sheet contains a melting-point drop component; and

FIG. 7 is a graph showing changes of a pressure loss ratio and a regeneration time ratio with respect to a covered area ratio of a narrowed portion.

DESCRIPTION OF THE PREFERRED EMBODIMENT

A best mode for carrying out a plugged honeycomb structure of the present invention, and a method of manufacturing the structure will be described specifically with reference to the drawings. Additionally, the present invention is not limited to the following embodiment.

In the present specification, "porosity" means a porosity $P_0$ calculated from a total pore volume V of a porous material obtained by a mercury press-in process, and a true specific gravity $d_t$ (2.52 g/cm$^3$ in cordierite) of constituting material of the porous material based on the following equation (1):

$$P_0 = V/(V+1/d_t) \times 100 \tag{1},$$

where $P_0$: porosity, V: total pore volume, $d_t$: true specific gravity $d_t$.

In the present specification, "thermal expansion coefficient" means a value measured in conformity to a method described in "Testing Methods of Ceramic Monolith Substrates for Automotive Exhaust Gas Catalyst Converters" (JASO_M 505-87): Test standard issued by Japan Society of Automotive Engineers.

A. Plugged Honeycomb Structure

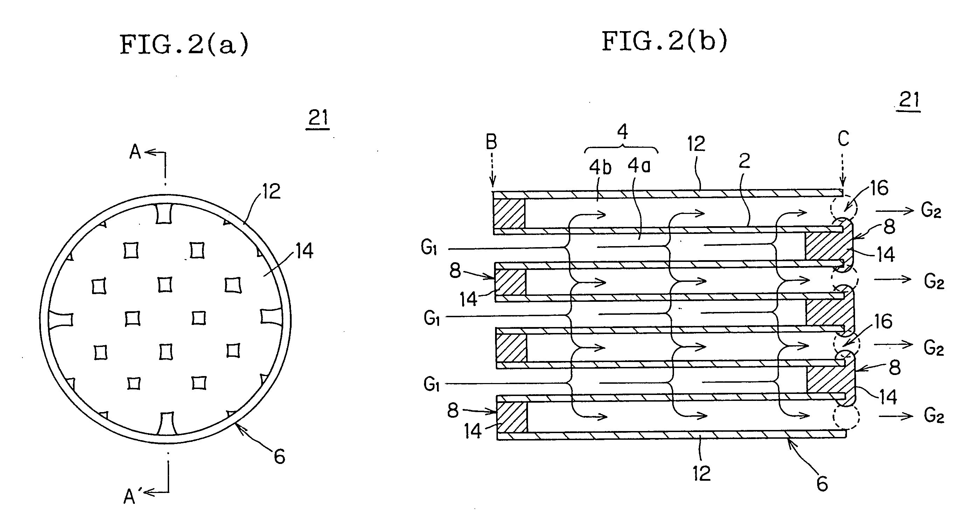

A plugged honeycomb structure of the present invention, like a plugged honeycomb structure 21 shown in FIGS. 2(a)(b), comprises: a honeycomb structural body 6 having partition walls 2 formed of porous materials and a large number of cells 4 defined•formed by the partition walls 2 to constitute channels of a fluid; and a plugging portion 8 which plugs any opening of the cell 4 of the honeycomb structural body 6. The structure further comprises: a narrowed portion 16 constituted in such a manner as to cover a part of an opening (non-plugged opening) which is not plugged by the plugging portion 8 of the cell 4 so that an open area of the opening is reduced to be smaller than a channel sectional area of the cell 4.

The narrowed portion is formed in the plugged honeycomb structure of the present invention in order to impart permeability resistance to exhaust gas during regeneration. Then, a gas flow is formed into turbulence, accordingly the exhaust gas is satisfactorily brought into contact with the partition wall of the plugged honeycomb structure, and heat of the exhaust gas is sufficiently conducted to the plugged honeycomb structure. That is, since a heat amount of the exhaust gas is effectively utilized, and a heating effect corresponding to the heat amount is obtained in the plugged honeycomb structure of the present invention, burning of PM is promoted during the regeneration, and a DPF can be regenerated with less energy in a short time. This effect is especially remarkable in the vicinity of the narrowed portion. Since a gas flow is converged by the narrowed portion, a muffling effect to suppress a gas discharge sound can be obtained.

(1) Honeycomb Structural Body

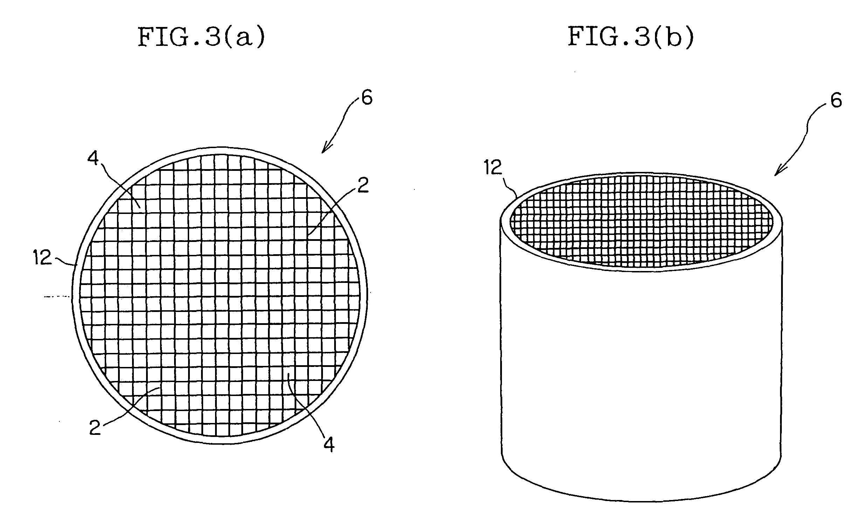

The "honeycomb structural body" mentioned in the present specification has partition walls 2 formed of porous materials, and a large number of cells 4 defined•formed by the partition walls 2 to constitute channels of a fluid, for example, as shown in FIGS. 3(a) and 3(b). The honeycomb structural body is a comparatively brittle structural body whose partition wall comprises a remarkably thin porous material. Therefore, in general, the structure further comprises an outer wall 12 which is a strengthening member disposed in such a manner as to cover an outer periphery as in the honeycomb structural body 6 shown in FIGS. 3(a) and 3(b). Consequently, mechanical strength of a whole of the honeycomb structural body can be enhanced, and deformation, breakage and the like at a use time can be effectively prevented.

The partition wall is preferably constituted of a porous material whose porosity is controlled in a range such that a pressure loss at a time when a fluid passes through the partition wall can be minimized in such a manner as to guarantee the mechanical strength of the honeycomb structural body, whereas a treatment capability of a filter is enhanced. When the honeycomb structure is used as a DPF, the honeycomb structural body excluding an end portion is preferably constituted of a porous material whose porosity is in a range of 50 to 85%. It is to be noted that, as described later, the porosity of the plugging portion or the narrowed portion is sometimes lowered to enhance strength, and there is a possibility that the porosity of the end portion of the partition wall is influenced and lowered. In the present invention, the honeycomb structural body "excluding an end portion" indicates the porosity of an original partition wall which does not include the corresponding portion.

Thickness of the partition wall is preferably set to such a range that the mechanical strength of the honeycomb structural body can be guaranteed whereas the pressure loss at the time when the fluid passes through the partition wall can be minimized. In the use as the DPF, the thickness of the partition wall is in a range of preferably 100 to 2000 $\mu$m, more preferably 200 to 1000 $\mu$m.

A whole shape of the honeycomb structural body is not especially limited. For example, in addition to a columnar shape shown in FIGS. 3(a) and 3(b), shapes such as a square pole shape and a triangle pole shape can be adopted. Above all, the columnar shape is preferable because extrusion is facilitated, firing deformation is little, and the honeycomb structural body can be easily sealed with respect to a housing. A size is not especially limited, and even a columnar shape having an outer diameter of 400 mm$\phi$ and a length of 400 mm or more can be easily prepared.

As a cell shape (shape of a section crossing a circulation direction of a liquid at right angles), in addition to a quadrangular shape such as a square shape shown in FIGS. 3(a) and 3(b), shapes such as a circular shape, a hexagonal shape, and a triangular shape can be adopted.

Although cell density differs with the shape or size of the cell, or the thickness of the partition wall, the density for use is usually in a range of 6 to 1500 cells/square inch (0.9 to 233 cells/cm$^2$). Especially in the use as the DPF, the cells having a density of 50 to 500 cells/square inch (7.7 to 77 cells/cm$^2$) are preferably used.

A material constituting the honeycomb structural body is not especially limited, and a ceramic is preferably used. Above all, materials superior in strength and resistances to heat and corrosion are preferably usable such as cordierite ($2MgO \cdot 2Al_2O_3 \cdot 5SiO_2$), silicon carbide (SiC), silicon nitride ($Si_3N_4$), alumina ($Al_2O_3$), zirconia ($ZrO_2$), mullite ($3Al_2O_3 \cdot 2SiO_2$), aluminum titanate ($Al_2TiO_5$), and silicon metal-silicon carbide complex material (Si-SiC).

The above-described honeycomb structural body can be obtained by a method in which puddle materials including aggregate particles formed of a ceramic, a pore forming material (microcapsule formed of graphite, starch, fly ash balloon, and resin), an organic binder (hydroxypropoxyl methyl cellulose, methyl cellulose, etc.), a dispersant (ethylene glycol, fatty acid soap, etc.) and the like are mixed•kneaded together with a dispersion medium such as water to thereby obtain a puddle. Next, the puddle is extruded using a ferrule, including a slit, having a shape complementary to the partition wall to be formed to obtain a honeycomb formed article. Furthermore, the honeycomb formed article is dried to obtain a ceramic dried article. Thereafter, the honeycomb dried article is fired.

(2) Plugging Portion

The "plugging portion" mentioned in the present specification means, for example, a portion which plugs any opening of the cell 4 of the honeycomb structural body 6 as in the plugging portion 8 of the plugged honeycomb structure 21 shown in FIGS. 2(a) and 2(b). In the use as the DPF, an opening plugged by the plugging portion 8 and an opening which is not plugged by the plugging portion are alternately arranged in the end face of the honeycomb structural body 6 in the same manner as in the plugged honeycomb structure 1 shown in FIGS. 1(a) and 1(b) to have a checkered pattern as a whole in many cases.

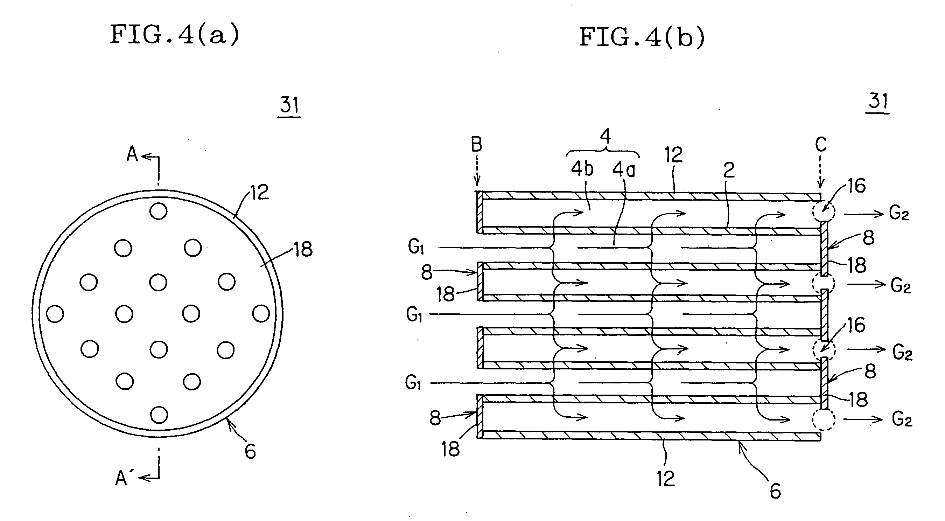

The structure of the plugging portion is not especially limited as long as the portion has a function of plugging any opening of the cell. For example, clogging materials 14 (puddle, etc.) are used as plugging materials, and the cells 4 are filled with the clogging materials 14 to thereby constitute the plugging portions 8 as in the plugged honeycomb structure 21 shown in FIGS. 2(a) and 2(b). Additionally, in the present invention, for example, sheet members 18 having a thickness of 0.5 to 3 mm are used as the plugging materials, and the plugging portions 8 preferably comprises the sheet members 18 as in a plugged honeycomb structure 31 shown in FIGS. 4(a) and 4(b).

When the plugging portion is formed of the sheet member, a large number of plugging portions can be remarkably easily formed, for example, by a method in which one sheet member is bonded in such a manner as to cover the end face of the honeycomb structural body. Holes are made only in portions corresponding to cell openings which are not plugged in the sheet member.

On the other hand, when the plugging portion is formed of the clogging portion, a large number of cell openings are filled with the clogging portions (puddle, etc.), or an adhesive sheet is bonded to the end face of the honeycomb structural body. The holes are made only in portions facing cell openings to be plugged in the adhesive sheet by laser working or the like utilizing image processing to form a mask. The end face of the honeycomb structural body to which the mask is attached is immersed in a ceramic slurry, and the cells are filled with the ceramic slurry to form the plugging portions. A laborious operation is sometimes required in this manner.

Moreover, when the plugging portion is formed by the sheet member, the plugging portion and the narrowed portion described later can be simultaneously formed. Additionally, when the sheet member is formed of a porous material (ceramic porous material, etc.), there is also an advantage that the plugging portion can function as a filtering material in the same manner as in the partition wall. Furthermore, when the cells are filled with the clogging materials, the partition walls are plugged by the plugging materials (clogging materials). An unfavorable situation occurs in which an effective area decreases, and pressure loss increases. However, when the plugging portion is formed of the sheet member, this situation can be avoided.

A material constituting the plugging portion is not especially limited, but a ceramic similar to that described in the paragraphs of the honeycomb structural body is preferably used. Above all, the plugging portion is constituted using, as a main component, the same component as a main component of the partition wall, and is preferably integrated with the partition wall. This constitution is preferable in that adhesion or bonding strength between the plugging portion and the partition wall is enhanced. Additionally, a thermal expansion coefficient difference between the plugging portion and the partition wall is reduced, and resistance to thermal shock is also enhanced. In the present specification, "integration" means that there is not any structural boundary between one member (e.g., partition wall) and another member (e.g., plugging material), and the members are inseparable. For example, presence of one phase is observed over a portion derived from one member and a portion derived from the other member, or the same physical•chemical behavior is indicated.

Considering from a viewpoint of enhancement of the resistance to thermal shock, the plugging portion does not have to comprise, as the main component, the same component as the main component of the partition wall, and may be comprise a material having an approximate thermal expansion coefficient. Specifically, as to the plugging portion, the thermal expansion coefficient difference from the partition wall in a temperature range of 40 to 800°C is preferably $0.5 \times 10^{-6}$/°C or less, more preferably $0.3 \times 10^{-6}$/°C or less. It is to be noted that the thermal expansion coefficient difference is calculated in consideration of the shape of the plugging portion or the partition wall, the porosity and the like.

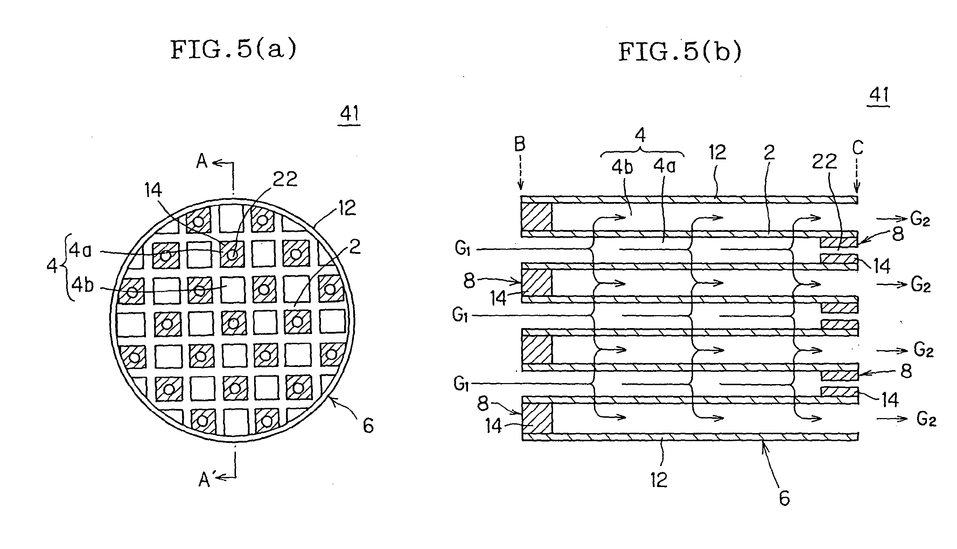

In the plugging portions, communication holes 22 for connecting the insides of the cells 4 to the outsides of the cells 4 are preferably constituted in such a manner that ashes deposited in the cells 4 can be discharged to the outsides of the cells 4 via the communication holes 22 in the same manner as in a plugged honeycomb structure 41 shown in FIGS. 5(a) and 5(b).

During the regeneration of the filter, PM is burnt•removed, but ashes formed by oxidized scales generated by wears on an inner combustion engine or additives of lubricants are not burnt•removed, and therefore they are gradually accumulated in the cells. The ashes block the surfaces of the partition walls, and raise the pressure loss, or an amount of PM which can be captured is decreased. Therefore, even when the filter is once regenerated, the filter unfavorably needs to be regenerated anew in a short period of time.

In the above-described constitution, since the PM to be originally captured is discharged to the outside of the cell 4 via the communication hole 22 immediately after start of the use of the filter, capturing efficiency drops. However, since the captured PM is accumulated in a short time to block the communication hole 22, the capturing efficiency similar to that of the conventional filter is fulfilled thereafter. Moreover, when the regeneration is performed, the PM which has blocked the communication hole 22 is removed, and the communication hole 22 is again opened. Therefore, the ashes are discharged to the outside of the cell 4 together with the exhaust gas. Thus, in the above-described constitution, the ashes deposited in the cells 4 can be discharged out of the cells 4 without requiring any special mechanism or device or without removing the filter.

The communication holes 22 are preferably formed only in the plugging portions 8 on one end face side of the plugged honeycomb structure 41 as in the plugged honeycomb structure 41 shown in FIGS. 5(a) and 5(b). When the end face is disposed and used as an outlet-side end face C, the above-described effect can be obtained. A shape of the communication hole is not especially limited, and a circular shape is preferable as in the plugged honeycomb structure 41 shown in FIGS. 5(a) and 5(b). When the communication hole is formed into a circular shape, a diameter is set to preferably 0.1 to 2 mmφ, more preferably 0.2 to 1 mmφ.

It is to be noted that, as shown in FIG. 5(b), the communication hole 22 is clearly distinguished from the narrowed portion described later in that the communication hole is disposed in the outlet-side end face C of the fluid supply cell 4a (inlet-side end face B is opened, and a gas $G_1$ to be treated is introduced). That is, as shown in FIG. 2 (b), a narrowed portion 16 is disposed in the inlet-side end face B of the fluid supply cell 4a or the outlet-side end face C of the fluid discharge cell 4b (inlet-side end face B is plugged, and a treated gas $G_2$ passed through the partition wall 2 flows in). The communication hole 22 has a function of discharging the ashes deposited in the cells 4 to the outside. On the other hand, the narrowed portion 16 has a function of bringing the exhaust gas into sufficient contact with the partition wall of the plugged honeycomb structure. The functions are different from each other in this manner.

(3) Narrowed Portion

In the present specification, the "narrowed portion" is constituted in such a manner as to cover a part of an opening (non-plugged opening) which is not plugged by the plugging portion 8 of the cell 4, and the open area of the non-plugged opening is reduced to be smaller than the channel sectional area of the cell 4, for example, as in the narrowed portion 16 of the plugged honeycomb structure 21 shown in FIGS. 2(a) and 2(b). Since the exhaust gas is brought into sufficient contact with the partition wall of the plugged honeycomb structure by the narrowed portion as described above during the regeneration utilizing post jetting or heating heater, the burning of the PM is promoted, and the DPF can be regenerated in a short time.

The narrowed portion preferably covers 5 to 40% by area of the non-plugged opening, and the open area of the non-plugged opening is reduced into 60 to 95% by area of the channel sectional area of the cell. The portion more preferably covers 5 to 25% by area of the non-plugged opening, and the open area of the non-plugged opening is reduced into 75 to 95% by area of the channel sectional area of the cell.

When the covering area of the non-plugged opening is set to the above-described range, the increase of the pressure loss is suppressed to a level which does not cause any practical problem, and an effect of reducing the regeneration time can be enjoyed. Especially, when the covering area of the non-plugged opening is set to 5 to 25% by area, the pressure loss hardly increases, and the effect of reducing the regeneration time can be preferably enjoyed.

On the other hand, when the covering area of the non-plugged opening is less than the above-described range, the effect of reducing the regeneration time is unfavorably small. When the above-described range is exceeded, a remarkably increase of the pressure loss is involved, and additionally the effect of reducing the regeneration time unfavorably has peaked.

The shape of the narrowed portion is not especially limited as long as the shape has an effect of covering a part of the non-plugged opening to reduce the open area of the non-plugged opening to be smaller than the channel sectional area of the cell. Additionally, when the narrowed portion 16 and the plugging portion 8 are formed of one sheet member 18 as in the plugged honeycomb structure 31 shown in FIGS. 4(a) and 4(b), a hole is preferably formed in the sheet member 18 in such a manner that the covering area of the non-plugged opening falls in the above-described range. In this case, the shape of the hole is not especially limited, and desired shapes can be adopted such as a circular shape, a quadrangular shape, a hexagonal shape, and an octagonal shape.

An arrangement position of the narrowed portion is not limited as long as a part of the non-plugged opening is covered. That is, the narrowed portions may be disposed both in the non-plugged openings in the inlet and outlet-side end faces of the plugged honeycomb structure. The narrowed portion may be disposed in either the non-plugged opening of the inlet-side end face or that of the outlet-side end face.

The narrowed portion is preferably integrated with the plugging portion. Significance of the "integration" has been described above. The narrowed portion and the plugging portion may be formed of separate members, and a boundary portion between the portions may be molten and integrated by a method of heating the portion at high temperature. Alternatively, the narrowed portion and the plugging portion may be formed of one sheet member.

The plugging portion and/or the narrowed portion preferably has, in at least a part thereof, a high-strength portion whose mechanical strength is high as compared with another portion. This constitution is preferable in that the plugging portion or the narrowed portion can be prevented from being broken during collision of foreign patters such as scales included in the exhaust gas.

Examples of one mode of the high-strength portion include a portion whose porosity is lower than that of the other portion by 5% or more and which is densified. When the porosity is lowered, and the portion is densified, the mechanical strength of the corresponding portion can be enhanced, and the above-described effect can be enjoyed,

The plugged honeycomb structure of the present invention described above is simply used. Alternatively, the structure is used in a state in which various catalysts or purifying materials are carried such as: an oxidation catalyst formed of noble metals such as platinum (Pt), palladium (Pd), and rhodium (Rh) to promote oxidation of the PM; an $NO_x$ adsorption catalyst formed of an alkali metal (Li, Na, K, Cs, etc.) or an alkali earth metal (Ca, Ba, Sr, etc.) to absorb/contain nitrogen oxide ($NO_x$); a three-dimensional catalyst; an auxiliary catalyst represented by oxide of cerium (Ce) and/or zirconium (Zr); and a hydro carbon (HC) adsorptive material.

B. Manufacturing Method

A plugged honeycomb structure of the present invention described above can be obtained by forming a plugging portion and a narrowed portion in a honeycomb structural body. For example, there is an example in which an adhesive sheet is bonded to the end face of the honeycomb structural body, a hole is made only in a portion corresponding to a cell portion to be plugged in the adhesive sheet by laser working utilizing image processing to form a mask, and the end face of the honeycomb structural body to which the mask has been attached is immersed in a ceramic slurry. The cells are filled with the ceramic slurries to form the plugging portions, and thereafter ceramic puddle is bonded to a non-plugged opening of each cell to form each narrowed portion.

Additionally, in the manufacturing method of the present invention, a plugging material is disposed in such a manner as to plug any opening of the cell of the honeycomb structural body to form the plugging portion, and a part of the non-plugged opening is covered with the plugging material to form the narrowed portion.

Accordingly, the plugging portion and the narrowed portion are simultaneously formed, and the plugged honeycomb structure is obtained.

In the above-described method, since the plugging portion and the narrowed portion can be simultaneously formed by one plugging material, even the plugged honeycomb structure of the present invention comprising the narrowed portion and having a complicated shape as compared with a usual plugged honeycomb structure can be easily manufactured by manufacturing steps similar to or simpler than those of a conventional structure without involving any laborious manufacturing step. It is to be noted that "the same time" in the manufacturing method of the present invention includes a case where the plugging portion and the narrowed portion are formed by a series of steps.

As the "plugging materials " in the manufacturing method of the present invention, the clogging materials 14 (puddle, etc.) are usable as in the plugged honeycomb structure 21 shown in FIGS. 2(a) and 2(b), but the sheet members 18 having a thickness of 0.5 to 3 mm as in the plugged honeycomb structure 31 shown in FIGS. 4(a) and 4(b), especially ceramic sheet members (hereinafter referred to simply as the "ceramic sheet members") having a thickness of 0.5 to 3 mm are preferably used.

Examples of an effect in a case where the ceramic sheet member is used as the plugging material include, as described above, (i) the plugging portions are easily formed, (ii) the plugging portion and the narrowed portion can be formed at the same time, (iii) when the sheet member is formed of a porous material, the plugging portion functions as a filtering member, and (iv) a decrease of an effective area of the partition wall by the filling with the clogging material, and an increase of the pressure loss can be avoided.

In the method using the ceramic sheet member as the plugging material, after attaching the ceramic sheet member to the honeycomb structural body, the hole is made in the portion corresponding to the non-plugged opening of the honeycomb structural body in the ceramic sheet member, and the non-plugged opening is opened by an area corresponding to 60 to 95% by area of the channel sectional area of the cell. Accordingly, the plugging portion and the narrowed portion can be formed at the same time.

Moreover, as the plugging material, a punching sheet constituted by making a hole in the ceramic sheet member in such a manner as to face a position of the non-plugged opening of the honeycomb structural body is usable. The method using the punching sheet has the same thought as that of the method using the ceramic sheet member in that the plugging portion and the narrowed portion are simultaneously formed of one sheet-like member. The methods are different only in a timing to make the hole in the sheet-like member. Therefore, even in this method, an effect similar to that of the method using the ceramic sheet member can be obtained.

In the method using the punching sheet as the plugging material, the punching sheet is attached to the end face of the honeycomb structural body in such a manner as to align the hole in the punching sheet with the position of the non-plugged opening, and the non-plugged opening is opened by the area corresponding to 60 to 95% by area of the channel sectional area of the cell. Consequently, the plugging portion and the narrowed portion can be formed at the same time.

In the manufacturing method of the present invention, the honeycomb structural body, and the ceramic sheet member (including the punching sheet) may be non-dried formed articles, dried articles obtained by drying the formed articles, or sintered articles obtained by firing the dried articles. Additionally, in the manufacturing method of the present invention, a non-fired honeycomb dried article is used as the honeycomb structural body, and further a non-dried sheet-like ceramic formed article (green sheet) is preferably used as the ceramic sheet member.

By the use of the honeycomb dried article as the honeycomb structural body, handling is facilitated as compared with the use of the non-dried formed article. There is also an advantage that bonding or integrating with respect to the ceramic sheet member is facilitated as compared with the sintered article. Similarly, by the use of the green sheet as the ceramic sheet member, the bonding or integrating with respect to the honeycomb structural body is facilitated as compared with the dried or sintered article.

When the non-fired honeycomb dried article is used as the honeycomb structural body, and the green sheet is used as the ceramic sheet member as described above, the ceramic sheet member is attached to the end face of the honeycomb structural body, the non-plugged opening is opened by a specific area, the plugging portion and the narrowed portion are simultaneously formed, and thereafter it is necessary to dry•fire the portions. A condition of the drying•firing may be appropriately selected in accordance with a material or composition of the honeycomb dried article or the green sheet.

The green sheet obtained by a conventional known manufacturing process such as an extrusion process and a doctor blade process is usable. When the plugging portion is operated as a filtering material, an appropriate amount of a pore forming material (e.g., foaming resin, resin-formed microcapsule, spherical ceramic particles, hollow ceramic balloon, particulate matter having a burn-off property, etc.) is added to raw materials of the green sheet. Consequently, the porosity of the plugging portion can be adjusted into a desired value.

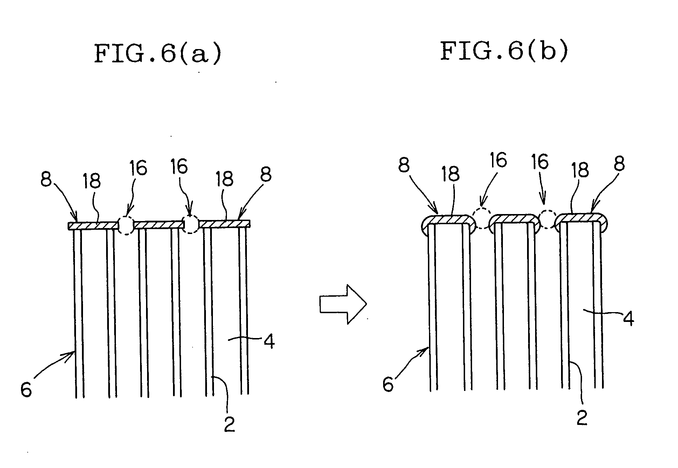

Moreover, the green sheet containing a melting-point drop component of a ceramic which is a constituting component is preferably used. When the green sheet contains the melting-point drop component, the porosity of the plugging portion, narrowed portion, or partition wall in the vicinity of the plugging portion or the narrowed portion can be lowered after the firing, and it is possible to form the high-strength portions in these members. When the green sheet contains the melting-point drop component, as shown in step diagrams of FIG. 6, the sheet members 18 (see FIG. 6(a)) which are plugging materials are molten and brought into hanging shapes (see FIG. 6(b)), and adhesion with respect to the partition wall 2 can be enhanced. The shape can be easily changed into a desired shape by adjustment of a type or content of the melting-point drop component.

For example, when the constituting component of the green sheet is a cordierite forming material, examples of the melting-point drop component include at least one of iron, silica, and magnesia, and this component mixed with a solvent (see Japanese Patent Application Laid-Open No. 2001-226173) or the like is preferably usable. This melting-point drop component contained in the end face of the honeycomb structural body in addition to the green sheet is also one of preferable modes.

Moreover, as the green sheet, a support member having a burn-off property, to which a ceramic slurry is attached or which is impregnated with the ceramic slurry, is preferably used. When the green sheet is prepared, viscosity of the ceramic slurry, thickness of the support member and the like are appropriately changed, and accordingly a desired green sheet can be obtained. By the use of the support member, the manufacturing of the green sheet is facilitated. Additionally, handling strength of the obtained green sheet is enhanced. Therefore, the handling is also facilitated. This method is especially effective in a case where the plugging portion is formed into a 1.5 mm or thinner film, and the plugging portion is to be used as the filtering material of the filter.

After attaching the green sheet to the end face of the honeycomb structural body, the support member has to be usually removed before fired. However, when the support member preferably has a burn-off property, a removing operation is not required. As a material of the support member having the burn-off property, any material may be used as long as the material burns off during heating on a firing condition of the green sheet. For example, cloth, paper, resin or the like is preferably used. It is to be noted that even by the use of the support member attached to at least one surface of the already formed green sheet, the handling strength can be improved. For example, when peeling paper formed of thin paper is used as the sheet member having the burn-off property, and the peeling paper is attached to at least one face of the green sheet, handling in a post step is facilitated.

Furthermore, as the green sheet, a support member including irregularities on the surface and having a burn-off property, to which the ceramic slurry is attached or which is impregnated with the ceramic slurry, is preferably used. As compared with the support member having a smooth surface, the ceramic slurry is easily attached or impregnated. This method is especially effective for a resin-formed support member to which the ceramic slurry is not easily attached or which is not easily impregnated with the slurry.

As a method of making the hole in the ceramic sheet member, various methods can be adopted such as (i) a method in which the hole is formed in the ceramic sheet member by mechanical working or laser working, (ii) a method in which a needle-point-holder-shaped jig having a large number of protrusions is pressed to thereby form the hole in the ceramic sheet member, and (iii) a method in which a material having a burn-off property is buried in a hole forming portion beforehand, and the portion is burnt off by heating such as firing at high temperature to make the hole. Above all, the methods using the laser working, and the needle-point-holder-shaped jig are preferable in that time required for the working can be reduced, and precise working is possible. These methods are also preferable as a method in which the communication hole 22 for discharging the ashes is formed as in the plugged honeycomb structure 41 shown in FIG. 5.

In this case, the shape of the hole is not especially limited. Needless to say, simple shapes may be used such as a circular shape, quadrangular shape, hexagonal shape and octagonal shape. A complicated shape such as a geometric shape may be used, and a desired shape can be used. For example, symbols such as "@", and characters such as "A", "B", "C", "P", "Q" are drawn on the ceramic sheet member, for example, using a laser marker apparatus (see Japanese Patent Application Laid-Open Nos. 2002-210373 and 2003-285313, etc.). Accordingly, the holes having various shapes other than the above-described shapes may be formed. Above all, the method in which "@" is drawn to make the hole is preferable in that wastes generated in making the hole can be easily discharged•removed as small pieces outside the cells by air blowing or the like. It is to be noted that the shape of the hole does not have to be uniform into one type, and two or more types of shapes may be combined and used.

Examples of the needle-point-holder-shaped jig include a jig in which a large number of pyramid-shaped (six-sided pyramid shape, etc.) protrusions are arranged in parallel. This jig is preferable in that a pressing amount of the jig onto the ceramic sheet member can be increased/decreased to thereby make a hole having a desired size. It is to be noted that a corner portion (side or vertex) of the pyramid-shaped protrusion may be chambered or provided with an R portion.

After making the hole in the ceramic sheet member, a fluid is preferably jetted to the formed hole (e.g., air blowing, etc.). Consequently, cut wastes and the like generated in making the hole may be removed, or the hole may be expanded. Examples of a device for jetting the fluid include a compressed air nozzle and the like.

It is to be noted that when the green sheet is used as the ceramic sheet member, needless to say, the hole needs to be made in consideration of firing contraction. That is, in the manufacturing method of the present invention, the hole is made into a size into which allowance for contraction of the green sheet at a drying•firing time is considered in the green sheet. Accordingly, the open area of the non-plugged opening after the firing is preferably controlled into 60 to 95% by area (more preferably 75 to 95% by area) of the channel sectional area of the cell.

[Examples]

The present invention will be described hereinafter in accordance with examples and comparative example in more detail. Additionally, the present invention is not limited to these examples.

(Comparative Example 1)

As Comparative Example 1, a plugged honeycomb structure was prepared comprising: a honeycomb structural body which was formed of cordierite and whose end face shape was a circle having an outer diameter of 300 mm$\phi$ and having a length of 230 mm and whose cell shape was a square having a partition wall thickness of 250 μm (10 mil), a partition wall porosity of 70%, and a cell density of 46.5 cell/cm$^2$ (300 cells/square inch); and a plugging portion formed of a cordierite sheet member having a thickness of 0.8 mm and porosity of 72%. The structure did not have any narrowed portion. It is to be noted that the plugged honeycomb structure was constituted in such a manner that an opening plugged by the plugging portion and an opening which was not plugged by the plugging portion were alternately arranged to form a checkered pattern as a whole.

To obtain the plugged honeycomb structure of Comparative Example 1, a green sheet was used as a plugging material, the green sheets were attached to opposite end faces of a non-fired honeycomb dried article, thereafter a hole was made in a portion facing a non-plugged opening of the honeycomb dried article in the green sheet, and the non-plugged opening was completely opened. Accordingly, the plugging portion was formed, and the structure was dried•fired. As the green sheet, gauze-like cloth (support member having a burn-off property) impregnated with a ceramic slurry in such a manner as to have a thickness of 0.8 mm after fired was used. A foaming resin (pore forming material) was contained in the ceramic slurry in such a manner as to a porosity of the fired ceramic sheet member was 72%.

(Examples 1 to 8)

Plugged honeycomb structures of Examples 1 to 8 were obtained in the same manner as in the plugged honeycomb structure of Comparative Example 1 except that an only part of a non-plugged opening was opened to form a plugging portion and a narrowed portion at the same time in making a hole in a portion facing the non-plugged opening of a honeycomb dried article in a green sheet. The hole was made using a needle-point-holder-shaped jig in which a large number of six-sided-pyramid-shaped protrusions were juxtaposed. It is to be noted that in Examples 1 to 8, narrowed portions were formed both in a non-plugged opening of an inlet-side end face and that of an outlet-side end face of the plugged honeycomb structure. A "covering area ratio (area%) described in Table 1 indicates a ratio of an area of the non-plugged opening covered by the narrowed portion with respect to a cell channel sectional area. The ratio is a value obtained by selecting 30 non-plugged openings per end face of each plugged honeycomb structure, and measuring open areas to calculate an average value.

[Table 1]

|  | Covering area ratio (area%) | Pressure loss ratio | Regeneration time ratio |
|---|---|---|---|
| Comparative Example 1 | 0.0 | 1.00 | 1.00 |
| Example 1 | 4.7 | 1.02 | 0.90 |
| Example 2 | 12.3 | 1.05 | 0.80 |
| Example 3 | 21.0 | 1.08 | 0.72 |
| Example 4 | 26.5 | 1.12 | 0.68 |
| Example 5 | 32.0 | 1.18 | 0.65 |
| Example 6 | 42.1 | 1.32 | 0.61 |
| Example 7 | 48.6 | 1.48 | 0.60 |
| Example 8 | 55.0 | 1.66 | 0.59 |

The plugged honeycomb structures of Examples 1 to 8 were actually used as DPFs, and pressure losses and regeneration times were compared with those of the plugged honeycomb structure of Comparative Example 1 to evaluate the structures. Evaluation was performed using a 5000 cc diesel engine having six air cylinders.

[Pressure Loss Ratio]

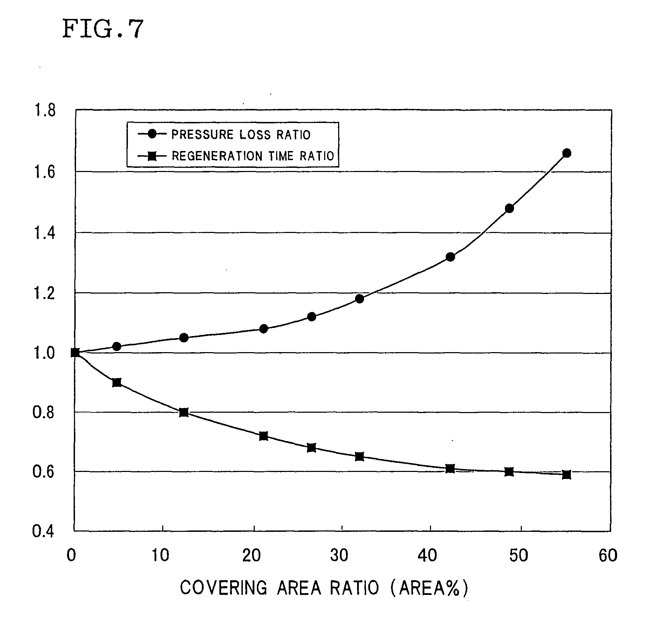

The diesel engine was continuously operated on an operation condition that engine revolution number was 2500 rpm, and an exhaust gas temperature in the inlet-side end face of plugged honeycomb structure was 250°C, and 3 g (total 49 g) soot per apparent volume of 1 L was captured by the connected plugged honeycomb structure. When the soot was captured, pressure loss rose. When 49 g of soot in total was captured, the pressure loss of each plugged honeycomb structure was measured on the operation condition that the engine revolution number was 2500 rpm, and the exhaust gas temperature in the inlet-side end face of plugged honeycomb structure was 250°C. Assuming that the pressure loss of the plugged honeycomb structure of Comparative Example 1 was 1, pressure loss ratios were calculated from ratios of pressure losses of the respective plugged honeycomb structure with respect to the pressure loss of the comparative example. Results are shown in Table 1 and FIG. 7.

[Regeneration Time Ratio]

After capturing the soot as described above, the engine revolution number was set to 3000 rpm, and post jetting was performed. Accordingly, the exhaust gas temperature in the inlet-side end face of the plugged honeycomb structure was raised at 580°C to regenerate the DPF. When the regeneration advanced, the pressure loss of the DPF dropped. However, assuming that the regeneration process was completed at a time when the pressure loss became substantially equal to an initial pressure loss, the regeneration time was measured. The "initial pressure loss" was defined as a value of the pressure loss measured on the condition that the post jetting was performed at an engine revolution number of 3000 rpm before capturing the soot, and the exhaust gas in the inlet-side end face of the plugged honeycomb structure was at 580°C. Assuming that the regeneration time of the plugged honeycomb structure of Comparative Example 1 was 1, a regeneration time ratio was calculated from a ratio of the regeneration time of each plugged honeycomb structure with respect to the comparative example. Results are shown in Table 1 and FIG. 7. It is to be noted that a mass of the soot at a time when the regeneration process was completed was measured, and it was confirmed that the soot was substantially completely burnt/removed in the comparative example and all the examples.

[Evaluation Result]

As apparent from Table 1 and FIG. 7, the regeneration time was reduced in all of the plugged honeycomb structures of Examples 1 to 8, and satisfactory results were indicated. Specifically, even when the covering area ratio was a little less than 5% by area, the regeneration time was effectively reduced by 10% (Example 1). When slightly exceeding 40% by area, the effect of reducing the regeneration time increased with the increase of the covering area ratio (Example 6), and remarkably satisfactory results were shown. Additionally, when the covering area ratio approached 50% by area, the effect of reducing the regeneration time peaked (Examples 7, 8). As a result, even when the covering area ratio was further increased, an increase of the effect could not be anticipated. From the above-described results, from a viewpoint of the regeneration time, the covering area ratio is set to preferably 5% by area or more, more preferably 5 to 40% by area.
Moreover, the pressure losses of all the plugged honeycomb structures of Examples 1 to 8 increased, but they were levels which did not cause any practical problem in the plugged honeycomb structures of Examples 1 to 6, and satisfactory results were indicated. Specifically, when the covering area ratio slightly exceeded 25% by area, the increase of the pressure loss was hardly recognized, and the remarkably satisfactory results were indicated (Examples 1 to 4). When slightly exceeding 40% by area, the increase of the pressure loss was recognized, but the increase had a level which did not raise any practical problem, and satisfactory results were indicated (Examples 5, 6). Additionally, when the covering area ratio approached 50% by area, the remarkable increase of the pressure loss was recognized (Examples 7, 8). From the above-described results, from a viewpoint of the pressure loss, the covering area ratio is set to preferably 40% by area or less, more preferably 25% by area.
A method of manufacturing a porous ceramic structure of the present invention is preferably usable as a dust collecting filter for use in applications such as an environmental measure for preventing pollution, and product recovery from a high-temperature gas in various fields of chemistry, electricity, iron and steel, and industrial waste disposal, especially as a diesel particulate filter which captures particulate matters discharged from a diesel engine such as an automobile diesel engine for use at high temperature in corrosive gas atmosphere.

**Claims**

1. A plugged honeycomb structure comprising:

    a honeycomb structural body having partition walls formed of porous materials and a large number of cells defined•formed by the partition walls to constitute channels of a fluid; and
    a plugging portion which plugs an opening of the cell of the honeycomb structural body,
    the plugged honeycomb structure further comprising: a narrowed portion constituted in such a manner as to cover a part of an opening (non-plugged opening) which is not plugged by the plugging portion of the cell so that an open area of the non-plugged opening is reduced to be smaller than a channel sectional area of the cell.

2. The plugged honeycomb structure according to claim 1, wherein the narrowed portion is constituted in such a manner as to cover 5 to 40% by area of the non-plugged opening so that the open area of the non-plugged opening is reduced into 60 to 95% by area of the channel sectional area of the cell.

3. The plugged honeycomb structure according to claim 1, wherein the narrowed portion is constituted in such a manner as to cover 5 to 25% by area of the non-plugged opening so that the open area of the non-plugged opening is reduced into 75 to 95% by area of the channel sectional area of the cell.

4. The plugged honeycomb structure according to any one of claims 1 to 3, wherein the plugging portion comprises the same component as a main component of the partition wall as a main component, and is integrated with the partition wall.

5. The plugged honeycomb structure according to any one of claims 1 to 4, wherein the plugging portion comprises a sheet member having a thickness of 0.5 to 3 mm.

6. The plugged honeycomb structure according to any one of claims 1 to 5, wherein the plugging portion and/or the narrowed portion has a high-strength portion having a mechanical strength higher than that of another portion in at least a part thereof.

7. The plugged honeycomb structure according to claim 6, wherein the plugging portion and/or the narrowed portion has the high-strength portion whose porosity is lower than that of the other portion by 5% or more, and is densified.

8. The plugged honeycomb structure according to any one of claims 1 to 7, wherein the plugging portion has a thermal expansion coefficient difference from the partition wall, which is $0.5 \times 10^{-6}/°C$ or less in a temperature range of 40 to $800°C$.

9. The plugged honeycomb structure according to any one of claims 1 to 8, wherein the narrowed portion is integrated with the plugging portion.

10. The plugged honeycomb structure according to any one of claims 1 to 9, wherein the partition wall excluding an end portion thereof is formed of a porous material whose porosity is in a range of 50 to 85%.

11. The plugged honeycomb structure according to any one of claims 1 to 10, wherein the plugging portion is constituted in such a manner that a communication hole for connecting the inside of the cell to the outside of the cell is formed, and ashes deposited in the cell are discharged to the outside of the cell via the communication hole.

12. A method of manufacturing a plugged honeycomb structure comprising: a honeycomb structural body having partition walls formed of porous materials and a large number of cells defined•formed by the partition walls to constitute channels of a fluid; a plugging portion which plugs an opening of the cell of the honeycomb structural body; and a narrowed portion constituted in such a manner as to cover a part of an opening (non-plugged opening) which is not plugged by the plugging portion of the cell so that an open area of the non-plugged opening is reduced to be smaller than a channel sectional area of the cell,
    the method comprising the steps of: disposing a plugging material in such a manner as to plug an opening of the cell of the honeycomb structural body to form the plugging portion; covering a part of the non-plugged opening with the plugging material to form the narrowed portion; thereby forming the plugging portion and the narrowed portion at the same time to obtain the plugged honeycomb structure.

13. The method of manufacturing the plugged honeycomb structure according to claim 12, further comprising the steps of: bonding a ceramic sheet member which is the plugging material to an end face of the honeycomb structural body; thereafter making a hole in a portion corresponding to the non-plugged opening of the honeycomb structural body in the ceramic sheet member; and opening the non-plugged opening by an area corresponding to 60 to 95% by area of the channel sectional area of the cell to thereby form the plugging portion and the narrowed portion at the same time.

14. The method of manufacturing the plugged honeycomb structure according to claim 12, further comprising the steps of: using a punching sheet as the plugging material, which is obtained by making a hole in a ceramic sheet member in such a manner as to face a position of the non-plugged opening of the honeycomb structural body; bonding the punching sheet to an end face of the honeycomb structural body in such a manner as to align the hole with the position of the non-plugged opening; and opening the non-plugged opening by an area corresponding to 60 to 95% by area of the channel sectional area of the cell to thereby form the plugging portion and the narrowed portion at the same time.

15. The method of manufacturing the plugged honeycomb structure according to claim 13 or 14, further comprising the steps of: forming the plugging portion and the narrowed portion at the same time using a non-fired honeycomb dried article as the honeycomb structural body and using a non-dried sheet-like ceramic formed article (green sheet) as the ceramic sheet member; and thereafter drying•firing the portions to obtain the plugged honeycomb structure.

16. The method of manufacturing the plugged honeycomb structure according to claim 15, wherein the green sheet contains a melting-point drop component of a ceramic which is a constituting component.

17. The method of manufacturing the plugged honeycomb structure according to claim 15 or 16, wherein a support material having a burn-off property is used, as the green sheet, to which a ceramic slurry is attached or which is impregnated with the ceramic slurry.

18. The method of manufacturing the plugged honeycomb structure according to claim 15 or 16, wherein a support material having a burn-off property is used, as the green sheet, which is provided with irregularities on the surface thereof and to which a ceramic slurry is attached or which is impregnated with the ceramic slurry.

19. The method of manufacturing the plugged honeycomb structure according to any one of claims 13 to 18, further comprising the steps of: making the hole in the ceramic sheet member by laser processing.

20. The method of manufacturing the plugged honeycomb structure according to any one of claims 13 to 18, further comprising the steps of: pressing a needle-point-holder-shaped jig having a large number of protrusions to thereby form the hole in the ceramic sheet member

21. The method of manufacturing the plugged honeycomb structure according to any one of claims 13 to 20, further comprising the steps of: making the hole in the ceramic sheet member; and thereafter jetting a fluid to the made hole.

FIG.1(a)

FIG.1(b)

EP 1 604 726 A1

FIG.2(a)

FIG.2(b)

FIG.3(a)

FIG.3(b)

## FIG.4(a)

31

A

12

18

6

A'

## FIG.4(b)

31

B

4

4b 4a

12

2

C

16

$G_2$

$G_1$

8

18

8

18

$G_2$

$G_1$

16

$G_2$

$G_1$

8

18

8

18

$G_2$

12

6

EP 1 604 726 A1

# FIG.5(a)

# FIG.5(b)

EP 1 604 726 A1

FIG.6(a)　　　　　　FIG.6(b)

FIG.7

**European Patent Office**

**EUROPEAN SEARCH REPORT**

Application Number

EP 05 25 3511

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01/12320 A (JOHNSON MATTHEY PUBLIC LIMITED COMPANY; BRISLEY, ROBERT, JAMES; TWIGG,) 22 February 2001 (2001-02-22) * figure 1 * ----- | 1 | B01D39/20 B28B11/00 F01N3/022 C04B38/00 B01D53/92 |
| A | WO 03/082541 A (NGK INSULATORS, LTD; FUKUTA, KEN; OTA, TOMOKO) 9 October 2003 (2003-10-09) * paragraphs [0016], [0024]; figures 5a,5b * | 1,12 | |
| A | * paragraph [0030]; claim 3 * & EP 1 491 308 A (NGK INSULATORS, LTD) 29 December 2004 (2004-12-29) ----- | 19 | |
| A | EP 1 219 794 A (DENSO CORPORATION) 3 July 2002 (2002-07-03) * abstract; figure 2 * ----- | 11 | |
| A | EP 1 408 208 A (NGK INSULATORS, LTD) 14 April 2004 (2004-04-14) * abstract; figures 1b,2,3,5a,5b,5c * ----- | 11 | TECHNICAL FIELDS SEARCHED (Int.Cl.7) |
| A | US 2003/167755 A1 (NAKATANI KOICHIRO ET AL) 11 September 2003 (2003-09-11) * figures 15B,24B * ----- | 11 | B01D B28B F01N C04B |

The present search report has been drawn up for all claims

| Place of search | Date of completion of the search | Examiner |
|---|---|---|
| Munich | 25 August 2005 | Hoffmann, A |

**ANNEX TO THE EUROPEAN SEARCH REPORT
ON EUROPEAN PATENT APPLICATION NO.**

EP 05 25 3511

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2005

| Patent document cited in search report | | | Publication date | Patent family member(s) | | | Publication date |
|---|---|---|---|---|---|---|---|
| WO 0112320 | A | | 22-02-2001 | AT | 295226 | T | 15-05-2005 |
| | | | | DE | 60020070 | D1 | 16-06-2005 |
| | | | | EP | 1133355 | A1 | 19-09-2001 |
| | | | | WO | 0112320 | A1 | 22-02-2001 |
| | | | | JP | 2005500147 | T | 06-01-2005 |
| | | | | US | 2004175315 | A1 | 09-09-2004 |
| | | | | US | 6753294 | B1 | 22-06-2004 |
| WO 03082541 | A | | 09-10-2003 | JP | 2003285313 | A | 07-10-2003 |
| | | | | AU | 2003213378 | A1 | 13-10-2003 |
| | | | | EP | 1491308 | A1 | 29-12-2004 |
| | | | | WO | 03082541 | A1 | 09-10-2003 |
| | | | | US | 2005161148 | A1 | 28-07-2005 |
| EP 1491308 | A | | 29-12-2004 | JP | 2003285313 | A | 07-10-2003 |
| | | | | AU | 2003213378 | A1 | 13-10-2003 |
| | | | | EP | 1491308 | A1 | 29-12-2004 |
| | | | | US | 2005161148 | A1 | 28-07-2005 |
| | | | | WO | 03082541 | A1 | 09-10-2003 |
| EP 1219794 | A | | 03-07-2002 | JP | 2002256842 | A | 11-09-2002 |
| | | | | DE | 60102550 | D1 | 06-05-2004 |
| | | | | DE | 60102550 | T2 | 27-01-2005 |
| | | | | EP | 1219794 | A1 | 03-07-2002 |
| | | | | US | 2002078667 | A1 | 27-06-2002 |
| EP 1408208 | A | | 14-04-2004 | JP | 2004130229 | A | 30-04-2004 |
| | | | | EP | 1408208 | A1 | 14-04-2004 |
| | | | | US | 2004068971 | A1 | 15-04-2004 |
| US 2003167755 | A1 | | 11-09-2003 | JP | 2003049627 | A | 21-02-2003 |
| | | | | JP | 2003193821 | A | 09-07-2003 |
| | | | | JP | 2003214135 | A | 30-07-2003 |
| | | | | JP | 2003214155 | A | 30-07-2003 |
| | | | | JP | 2003260316 | A | 16-09-2003 |
| | | | | CN | 1464936 | A | 31-12-2003 |
| | | | | EP | 1415072 | A1 | 06-05-2004 |
| | | | | WO | 03014539 | A1 | 20-02-2003 |

EPO FORM P0459

For more details about this annex : see Official Journal of the European Patent Office, No. 12/82